# EUROPEAN PATENT APPLICATION

(11) **EP 4 761 311 A1**
(43) Date of publication of application: **17.06.2026**
(21) Application number: 24861850.6
(22) Date of filing: 23.08.2024
(51) Int. Cl.: H04W 12/03

(54) **DATA SECURITY PROTECTION METHOD AND COMMUNICATION APPARATUS**

(30) Priority: 07.09.2023 CN 202311156354
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN); HU, Xingxing, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2024/114262
(87) International publication number: WO 2025/051006

(57) **Abstract**

This application provides a data security protection method and a communication apparatus. The method includes: A distributed unit DU performs security protection on first data based on a first key, to obtain second data, where the first data includes a lower-layer radio resource control RRC message, and the security protection includes encryption protection and/or integrity protection; and the DU sends the second data to a terminal. The foregoing solution can reduce a transmission delay of the lower-layer RRC message, and improve transmission efficiency.

## Description

This application claims priority to Chinese Patent Application No. 202311156354.0, filed with the China National Intellectual Property Administration on September 7, 2023 and entitled "DATA SECURITY PROTECTION METHOD AND COMMUNICATION APPARATUS", which is incorporated herein by reference in its entirety.

### TECHNICAL FIELD

This application relates to the communication field, and more specifically, to a data security protection method and a communication apparatus.

### BACKGROUND

A radio access network (radio access network, RAN) may include a plurality of RAN nodes, and the plurality of RAN nodes may implement different functions of the RAN. The access network nodes may include a central unit (central unit, CU) and a distributed unit (distributed unit, DU). The CU is mainly responsible for implementing non-real-time higher-layer wireless protocol stack functions of the RAN. The DU is mainly responsible for implementing physical layer and real-time requirement functions of the RAN.

Currently, due to a security protection requirement, when the DU determines to configure a terminal, the DU needs to encapsulate configuration information in a radio resource control (radio resource control, RRC) container (container), and the CU transparently transmits (transparently transmit) the configuration information to the terminal. To be specific, the DU first sends the configuration information to the CU, and the CU encapsulates the configuration information into an RRC message and then sends the RRC message to the terminal via the DU. As a result, a transmission delay of the RRC message generated by the DU is high, and a problem of low transmission efficiency exists.

### SUMMARY

Embodiments of this application provide a data security protection method and a communication apparatus, to reduce a transmission delay of a lower-layer RRC message and improve transmission efficiency.

According to a first aspect, a data security protection method is provided. The method may be performed by a distributed unit DU in an access network.

The method includes: The DU performs security protection on first data based on a first key, to obtain second data, where the first data includes a lower-layer radio resource control RRC message, and the security protection includes encryption protection and/or integrity protection; and the DU sends the second data to a terminal.

According to the foregoing solution, this application proposes that a function of the DU is enhanced, so that the DU has a security protection function. The DU may perform, based on the first key, the security protection on the first data including the lower-layer RRC message, and perform sending to the terminal. In this way, when security is ensured, the lower-layer RRC message can be prevented from being sent from the DU to a CU, from being encapsulated by the CU, and then from being sent to the terminal via the DU, so that a transmission delay can be reduced.

In this application, a network side may send an RRC message to the terminal. The lower-layer RRC message may be information that is determined or generated by the DU and that requires the encryption protection and/or the integrity protection; or the lower-layer RRC message may be information related to configuration information of at least one layer of an RLC layer, a MAC layer, and a PHY layer; or the lower-layer RRC message may be information that is related to at least one of an RLC layer, a MAC layer, and a PHY layer and that requires the encryption protection and/or the integrity protection; or the lower-layer RRC message may be information that requires the encryption protection and/or the integrity protection at one of an RLC layer, a MAC layer, and a PHY layer.

For example, the first key may be referred to as a DU key, or may be referred to as a DU root key. The first key is used to derive an encryption key and/or an integrity protection key. The encryption key is used to perform the encryption protection on the first data, and the integrity protection key is used to perform the integrity protection on the first data.

In an implementation, the method further includes: The DU generates the first key based on an access stratum key and a first parameter, where the first parameter includes one or more of the following:
a DU key count value, an F1AP identifier allocated by the DU to the terminal, an F1AP identifier allocated by a CU to the terminal, a cell-radio network temporary identifier C-RNTI, a radio bearer identifier corresponding to the first data, or a logical channel identifier corresponding to the first data.

According to the foregoing solution, the DU may generate the first key based on the access stratum key and the first parameter, so as to perform the security protection on the lower-layer RRC message.

In another implementation, the method further includes: The DU receives first information from a central unit CU, where the first information indicates the first key.

According to the foregoing solution, the DU may obtain the first key from the CU, to implement the security protection on the lower-layer RRC message.

With reference to the first aspect, in some implementations of the first aspect, the first data is corresponding to a first logical channel, and the first logical channel is a logical channel corresponding to the lower-layer RRC message; or a radio bearer associated with the first logical channel is a radio bearer corresponding to the RRC message.

According to the foregoing solution, the first logical channel corresponding to the first data may be the logical channel corresponding to the lower-layer RRC message, or may be the logical channel associated with the radio bearer corresponding to the lower-layer RRC message. Therefore, after receiving the second data, the terminal can determine to perform the security protection on the second data based on the first key, to obtain the first data.

With reference to the first aspect, in some implementations of the first aspect, the method further includes: The DU determines that the logical channel corresponding to the lower-layer RRC message is the first logical channel; and the DU sends second information to a CU, where the second information indicates that the logical channel corresponding to the lower-layer RRC message is the first logical channel.

According to the foregoing solution, the DU may determine the logical channel corresponding to the lower-layer RRC message, and notify the CU, so that the CU may notify the terminal, so that the terminal and the DU reach a consensus on the logical channel corresponding to the lower-layer RRC message.

With reference to the first aspect, in some implementations of the first aspect, a header field of the second data includes third information, and the third information indicates that the second data includes the RRC message or indicates that the second data is associated with the first key.

According to the foregoing solution, the terminal may determine, based on the third information in the header field of the second data, to perform the security protection on the second data based on the first key, so as to obtain the first data. In this way, the DU and the terminal reach a consensus on the first key used for the second data, to implement reliable transmission of the first data.

With reference to the first aspect, in some implementations of the first aspect, that the DU performs the security protection on the first data based on the first key, to obtain the second data includes: The DU performs the security protection on the first data based on the first key by using a first security algorithm corresponding to the security protection, to obtain the second data.

With reference to the first aspect, in some implementations of the first aspect, the method further includes: The DU receives fourth information from a CU, where the fourth information indicates a security capability supported by the terminal; and the DU determines the first security algorithm based on the security capability supported by the terminal.

For example, the security capability supported by the terminal may include a security algorithm capability supported by the terminal.

According to the foregoing solution, the DU may obtain, from the CU, the security capability supported by the terminal, and the DU determines, based on the security capability supported by the terminal, to use the first security algorithm to perform the security protection on the lower-layer RRC message. In this way, the DU can select a security algorithm that matches a terminal capability, to perform the security protection on the lower-layer RRC message sent to the terminal.

With reference to the first aspect, in some implementations of the first aspect, the method further includes: The DU receives fifth information from a CU, where the fifth information indicates a security algorithm set. That the DU determines the first security algorithm based on the security capability supported by the terminal includes: The DU determines the first security algorithm in the security algorithm set based on the security capability supported by the terminal.

With reference to the first aspect, in some implementations of the first aspect, the method further includes: The DU sends sixth information to the CU, where the sixth information indicates the first security algorithm.

According to the foregoing solution, after determining the first security algorithm, the DU may notify the CU, so that the CU notifies the terminal of the first security algorithm determined by the DU, so that the DU and the terminal reach a consensus on the first security algorithm, to implement reliable transmission of the lower-layer RRC message.

With reference to the first aspect, in some implementations of the first aspect, the method further includes: The DU receives seventh information from a CU, where the seventh information indicates the first security algorithm.

According to a second aspect, a data transmission method is provided. The method may be performed by a terminal, or by a module (for example, a chip) configured in (or used in) a terminal. The following uses an example in which the terminal performs the method for description.

The method includes: The terminal receives second data, where the second data is by applying security protection to first data; and the terminal performs the security protection on the second data based on a first key, to obtain the first data, where the first data includes a lower-layer radio resource control RRC message, and the security protection includes encryption protection and/or integrity protection.

Specifically, that the terminal performs the security protection on the second data based on the first key, to obtain the first data may include: The terminal performs decryption on the second data based on an encryption key derived from the first key, to obtain the first data; and/or the terminal performs the integrity protection on the second data based on an integrity protection key derived from the first key, to obtain the first data.

With reference to the second aspect, in some implementations of the second aspect, the method further includes: The terminal generates the first key based on an access stratum key and a first parameter, where the first parameter includes one or more of the following:
a DU key count value, an F1AP identifier allocated by the DU to the terminal, an F1AP identifier allocated by a CU to the terminal, a cell-radio network temporary identifier C-RNTI, a radio bearer identifier corresponding to the first data, or a logical channel identifier corresponding to the first data.

With reference to the second aspect, in some implementations of the second aspect, the method further includes: The terminal receives eighth information from a central unit CU, where the eighth information indicates the first parameter.

With reference to the second aspect, in some implementations of the second aspect, the method further includes: The terminal receives ninth information from a CU, where the ninth information indicates that a logical channel corresponding to the lower-layer RRC message is a first logical channel; and the terminal determines, based on the second data including data of the first logical channel, to perform the security protection on the second data based on the first key.

With reference to the second aspect, in some implementations of the second aspect, the method further includes: The terminal receives tenth information from a CU, where the tenth information indicates a radio bearer corresponding to the lower-layer RRC message; and the terminal determines, based on the second data including the data of the first logical channel, and a radio bearer associated with the first logical channel being the radio bearer, to perform the security protection on the second data based on the first key.

With reference to the second aspect, in some implementations of the second aspect, a header field of the second data includes third information, and the third information indicates that the second data includes the lower-layer RRC message or indicates that the second data is associated with the first key.

With reference to the second aspect, in some implementations of the second aspect, that the terminal performs the security protection on the second data based on the first key, to obtain the first data includes: The terminal performs the security protection on the second data based on the first key by using a first security algorithm corresponding to the security protection, to obtain the first data.

With reference to the second aspect, in some implementations of the second aspect, the method further includes: The terminal receives eleventh information from a CU, where the eleventh information indicates the first security algorithm.

According to a third aspect, a data security protection method is provided. The method may be performed by a CU in an access network.

The method includes: The central unit CU sends twelfth information to a DU, where the twelfth information is used by the DU to determine a first key, the first key is used for security protection on a lower-layer RRC message, and the security protection includes security protection and/or integrity protection; and the CU sends a first parameter to a terminal, where the first parameter is used by the terminal to determine the first key, and the first parameter includes one or more of the following:
a DU key count value, an F1AP identifier allocated by the DU to the terminal, an F1AP identifier allocated by a CU to the terminal, a cell-radio network temporary identifier C-RNTI, a radio bearer identifier corresponding to first data, or a logical channel identifier corresponding to first data.

With reference to the third aspect, in some implementations of the third aspect, the method further includes: The CU determines the first key based on an access stratum key and the first parameter, where the twelfth information includes the first key.

With reference to the third aspect, in some implementations of the third aspect, the twelfth information includes the access stratum key, or the twelfth information includes the access stratum key and the first parameter.

With reference to the third aspect, in some implementations of the third aspect, the method further includes: The CU receives second information from the DU, where the second information indicates that a logical channel corresponding to the lower-layer RRC message is a first logical channel; and the CU sends ninth information to the terminal, where the ninth information indicates that the logical channel is the first logical channel.

With reference to the third aspect, in some implementations of the third aspect, the method further includes: The CU sends tenth information to the terminal, where the tenth information indicates a radio bearer corresponding to the lower-layer RRC message.

With reference to the third aspect, in some implementations of the third aspect, the method further includes: The CU sends fourth information to the DU, where the fourth information indicates a security capability supported by the terminal; the CU receives sixth information from the DU, where the sixth information indicates a first security algorithm, and the first security algorithm is an algorithm used for the security protection of the lower-layer RRC message; and the CU sends eleventh information to the terminal, where the eleventh information indicates the first security algorithm.

With reference to the third aspect, in some implementations of the third aspect, the method further includes: The CU sends fifth information to a DU, where the fifth information indicates a security algorithm set, and the security algorithm set is used by the DU to determine the first security algorithm.

With reference to the third aspect, in some implementations of the third aspect, the method further includes: The CU sends seventh information to the DU, where the seventh information indicates the first security algorithm, and the first security algorithm is an algorithm used for the security protection of the lower-layer RRC message; and the CU sends eleventh information to the terminal, where the eleventh information indicates the first security algorithm.

According to a fourth aspect, a communication apparatus is provided. In a design, the apparatus may include modules that are in one-to-one correspondence with the methods/operations/steps/actions according to the first aspect or any one of the implementations of the first aspect. The modules may be implemented by a hardware circuit, software, or a combination of a hardware circuit and software. In a design, the apparatus includes: a processing unit, configured to perform security protection on first data based on a first key, to obtain second data, where the first data includes a lower-layer radio resource control RRC message, and the security protection includes encryption protection and/or integrity protection; and a transceiver unit, configured to send the second data to a terminal.

With reference to the fourth aspect, in some implementations of the fourth aspect, a DU generates the first key based on an access stratum key and a first parameter. For the first parameter, refer to the descriptions in the first aspect. Details are not described herein again.

With reference to the fourth aspect, in some implementations of the fourth aspect, the transceiver unit is further configured to receive first information from a central unit CU, where the first information indicates the first key.

With reference to the fourth aspect, in some implementations of the fourth aspect, the processing unit is further configured to determine that a logical channel corresponding to the lower-layer RRC message is a first logical channel; and the transceiver unit is further configured to send second information to the CU, where the second information indicates that the logical channel corresponding to the lower-layer RRC message is the first logical channel.

With reference to the fourth aspect, in some implementations of the fourth aspect, the processing unit is specifically configured to perform the security protection on the first data based on the first key by using a first security algorithm corresponding to the security protection, to obtain the second data.

With reference to the fourth aspect, in some implementations of the fourth aspect, the transceiver unit is further configured to receive fourth information from the CU, where the fourth information indicates a security capability supported by the terminal; and the processing unit is further configured to determine the first security algorithm based on the security capability supported by the terminal.

With reference to the fourth aspect, in some implementations of the fourth aspect, the transceiver unit is further configured to receive fifth information from the CU, where the fifth information indicates a security algorithm set; and the processing unit is specifically configured to determine the first security algorithm in the security algorithm set based on the security capability supported by the terminal.

According to a fifth aspect, a communication apparatus is provided. In a design, the apparatus may include modules that are in one-to-one correspondence with the methods/operations/steps/actions according to the second aspect or any one of the implementations of the second aspect. The modules may be implemented by a hardware circuit, software, or a combination of a hardware circuit and software. In a design, the apparatus includes: a transceiver unit, configured to receive second data, where the second data is by applying security protection to first data; and a processing unit, configured to perform the security protection on the second data based on a first key, to obtain first data, where the first data includes a lower-layer radio resource control RRC message, and the security protection includes encryption protection and/or integrity protection.

With reference to the fifth aspect, in some implementations of the fifth aspect, the processing unit is further configured to generate the first key based on an access stratum key and a first parameter. For the first parameter, refer to the descriptions in the second aspect. Details are not described herein again.

With reference to the fifth aspect, in some implementations of the fifth aspect, the transceiver unit is further configured to receive eighth information from a central unit CU, where the eighth information indicates the first parameter.

With reference to the fifth aspect, in some implementations of the fifth aspect, the transceiver unit is further configured to receive ninth information from the CU, where the ninth information indicates that a logical channel corresponding to the lower-layer RRC message is a first logical channel; and the processing unit is further configured to determine, based on the second data including data of the first logical channel, to perform the security protection on the second data based on the first key.

With reference to the fifth aspect, in some implementations of the fifth aspect, the transceiver unit is further configured to receive tenth information from the CU, where the tenth information indicates a radio bearer corresponding to the lower-layer RRC message; and the processing unit is further configured to determine, based on the second data including the data of the first logical channel, and a radio bearer associated with the first logical channel being the radio bearer, to perform the security protection on the second data based on the first key.

With reference to the fifth aspect, in some implementations of the fifth aspect, the processing unit is specifically configured to perform the security protection on the second data based on the first key by using a first security algorithm corresponding to the security protection, to obtain the first data.

With reference to the fifth aspect, in some implementations of the fifth aspect, the transceiver unit is further configured to receive eleventh information from the CU, where the eleventh information indicates the first security algorithm.

According to a sixth aspect, a communication apparatus is provided. In a design, the apparatus may include modules that are in one-to-one correspondence with the methods/operations/steps/actions according to the third aspect or any one of the implementations of the third aspect. The modules may be implemented by a hardware circuit, software, or a combination of a hardware circuit and software. In a design, the apparatus includes: a processing unit, configured to determine twelfth information, where the twelfth information is used by a DU to determine a first key, the first key is used for security protection on a lower-layer RRC message, and the security protection includes security protection and/or integrity protection; and a transceiver unit, configured to send the twelfth information to the DU. The transceiver unit is further configured to send a first parameter to a terminal, where the first parameter is used by the terminal to determine the first key. For the first parameter, refer to the descriptions in the third aspect. Details are not described herein again.

With reference to the sixth aspect, in some implementations of the sixth aspect, the processing unit is further configured to determine the first key based on an access stratum key and the first parameter, where the twelfth information includes the first key.

With reference to the sixth aspect, in some implementations of the sixth aspect, the transceiver unit is further configured to receive second information from the DU, where the second information indicates that a logical channel corresponding to the lower-layer RRC message is a first logical channel; and the transceiver unit is further configured to send ninth information to the terminal, where the ninth information indicates that the logical channel corresponding to the lower-layer RRC message is the first logical channel.

With reference to the sixth aspect, in some implementations of the sixth aspect, the transceiver unit is further configured to send tenth information to the terminal, where the tenth information indicates a radio bearer corresponding to the lower-layer RRC message.

With reference to the sixth aspect, in some implementations of the sixth aspect, the transceiver unit is further configured to send fourth information to the DU, where the fourth information indicates a security capability supported by the terminal; the transceiver unit is further configured to receive sixth information from the DU, where the sixth information indicates a first security algorithm, and the first security algorithm is an algorithm used for the security protection of the lower-layer RRC message; and the transceiver unit is further configured to send eleventh information to the terminal, where the eleventh information indicates the first security algorithm.

With reference to the sixth aspect, in some implementations of the sixth aspect, the transceiver unit is further configured to send fifth information to the DU, where the fifth information indicates a security algorithm set, and the security algorithm set is used by the DU to determine the first security algorithm.

With reference to the sixth aspect, in some implementations of the sixth aspect, the transceiver unit is further configured to send seventh information to the DU, where the seventh information indicates the first security algorithm, and the first security algorithm is an algorithm used for the security protection of the lower-layer RRC message; and the transceiver unit is further configured to send eleventh information to the terminal, where the eleventh information indicates the first security algorithm.

According to a seventh aspect, a communication apparatus is provided, and includes a processor. The processor may implement the methods in the foregoing first aspect to the foregoing third aspect and any one of the possible implementations of the foregoing first aspect to the foregoing third aspect. Optionally, the communication apparatus further includes a memory. The processor is coupled to the memory, and may be configured to execute instructions in the memory, to implement the methods in the foregoing first aspect to the foregoing third aspect and any one of the possible implementations of the foregoing first aspect to the foregoing third aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a communication device (for example, a terminal or an access network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to an eighth aspect, a processor is provided, and includes an input circuit, an output circuit, and a processing circuit. The processing circuit is configured to: receive a signal through the input circuit, and transmit a signal through the output circuit, so that the processor performs the methods in the foregoing first aspect to the foregoing third aspect and any one of the possible implementations of the foregoing first aspect to the foregoing third aspect.

In a specific implementation process, the foregoing processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver; a signal output by the output circuit may be output to, for example, but not limited to, a transmitter, and transmitted by the transmitter; and the input circuit and the output circuit may be a same circuit, where the circuit is used as the input circuit and the output circuit at different moments. Specific implementations of the processor and the various circuits are not limited in embodiments of this application.

According to a ninth aspect, a computer program product is provided. The computer program product includes a computer program (which may also be referred to as code or instructions). When the computer program is run, a computer is caused to perform the methods in the foregoing first aspect to the foregoing third aspect and any one of the possible implementations of the foregoing first aspect to the foregoing third aspect.

According to a tenth aspect, a computer-readable storage medium is provided. The computer-readable storage medium stores a computer program (which may also be referred to as code or instructions). When the computer program is run on a computer, the computer is caused to perform the methods in the foregoing first aspect to the foregoing third aspect and any one of the possible implementations of the foregoing first aspect to the foregoing third aspect.

According to an eleventh aspect, a communication system is provided, and includes at least one foregoing DU and at least one foregoing CU. Optionally, the communication system further includes at least one foregoing terminal.

### BRIEF DESCRIPTION OF DRAWINGS

FIG. 1 is a diagram of an architecture of a communication system according to an embodiment of this application;
FIG. 2 is a diagram of a structure of an access network device according to an embodiment of this application;
FIG. 3 is a diagram of a protocol stack according to an embodiment of this application;
FIG. 4 is a diagram of a protocol stack of a CU and a DU according to an embodiment of this application;
FIG. 5 is another diagram of a protocol stack of a CU and a DU according to an embodiment of this application;
FIG. 6 is a diagram of a data encryption process according to an embodiment of this application;
FIG. 7 is a diagram of data integrity protection according to an embodiment of this application;
FIG. 8 is a diagram of a key derivation architecture according to an embodiment of this application;
FIG. 9 is a schematic flowchart of a data security protection method according to an embodiment of this application;
FIG. 10 is another schematic flowchart of a data security protection method according to an embodiment of this application;
FIG. 11 is another schematic flowchart of a data security protection method according to an embodiment of this application;
FIG. 12 is a block diagram of an example of a communication apparatus according to an embodiment of this application; and
FIG. 13 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may be used to describe a case in which there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity or an execution sequence, and the terms such as "first" and "second" do not necessarily indicate a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5^{th} generation (5^{th} generation, 5G) communication system, for example, new radio (new radio, NR) in the 5G communication system, and a wireless fidelity (wireless fidelity, Wi-Fi) system. In addition, the communication method provided in this application may be further applied to a 6^{th} generation (6^{th} generation, 6G) communication system and another communication system evolved after 5G, a future communication system, or another communication system. This is not limited in this application.

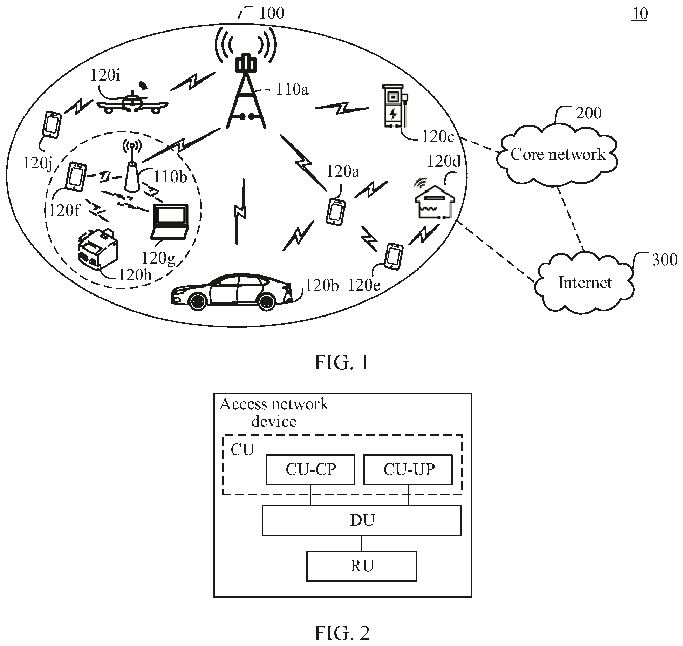

FIG. 1 is a diagram of a possible and non-limiting system. As shown in FIG. 1, a communication system 10 includes a RAN 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the access network node (or referred to as the RAN node) 110 in a wireless manner. The access network node 110 is connected to the core network 200 in a wireless or wired manner. A core network device in the core network 200 and the access network node 110 in the RAN 100 may respectively be different physical devices, or may be a same physical device that integrates a logical function of the core network and a logical function of the radio access network.

The RAN 100 may be a cellular system related to the 3^{rd} generation partnership project (3^{rd} generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The access network node 110 sometimes may also be referred to as an access network device, a RAN entity, an access node, or the like sometimes, and forms a part of the communication system, to help the terminal implement radio access. A plurality of access network nodes 110 in the communication system 10 may be nodes of a same type, or may be nodes of different types. In some scenarios, roles of the access network node 110 and the terminal 120 are relative. For example, a network element 120i in FIG. 1 may be a helicopter or an uncrewed aerial vehicle, and may be configured as a mobile base station. For terminals 120j that access the RAN 100 via the network element 120i, the network element 120i is a base station, but for a base station 110a, the network element 120i is a terminal. Sometimes, the access network node 110 and the terminal 120 are both referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the access network node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6^{th} generation (6^{th} generation, 6G) mobile communication system, a base station in a future mobile communication system, an access node in a Wi-Fi system, or the like. The access network node may be a macro base station (for example, 110a in FIG. 1), a micro base station or an indoor station (for example, 110b in FIG. 1), a relay node or a donor node, or a radio controller in a CRAN scenario. Optionally, the access network node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network node in this application may alternatively be implemented through a software function running on hardware, or may be implemented through a virtualized function instantiated on a platform (for example, a cloud platform). The access network node in this application may alternatively be a logical node, a logical module, or software that can implement all or a part of the functions of the access network node.

In another possible scenario, a plurality of access network nodes cooperate to assist the terminal in implementing radio access, and different access network nodes separately implement a part of functions of the access network device. For example, as shown in FIG. 2, an access network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A terminal may also be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, sensing terminal, integrated sensing and communication terminal, smart city, or the like. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robot arm, a sensor, a perceptron, a smart home device (for example, 120h in FIG. 1), or the like.

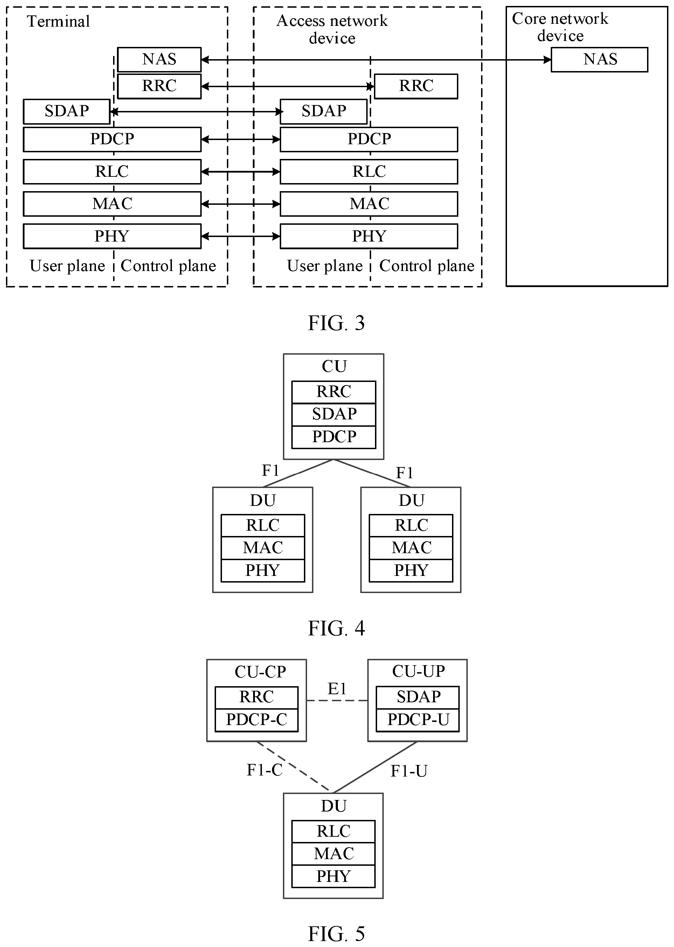

Communication between an access network device and a terminal complies with a specific protocol layer structure. As shown in FIG. 3, the protocol layer structure may include a control plane protocol layer structure and a user plane protocol layer structure. For example, the control plane protocol layer structure may include a function of at least one of the following protocol layers: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane protocol layer structure may include a function of at least one of the following protocol layers: a PDCP layer, an RLC layer, a MAC layer, or a physical layer. In a possible implementation, a service data adaptation protocol (service data adaptation protocol, SDAP) layer may be further included above the PDCP layer.

The foregoing protocol layer structure between the access network device and the terminal may be considered as an access stratum (access stratum, AS) structure. Optionally, a non-access stratum (non-access stratum, NAS) may further exist above an AS, and the NAS is used by the access network device to forward, to the terminal, information that is from a core network device, or is used by the access network device to forward, to the core network device, information that is from the terminal. In this case, it may be considered that a logical interface exists between the terminal and the core network device. The access network device may forward information between the terminal and the core network device in a transparent transmission manner. For example, NAS signaling may be mapped to or included in RRC signaling as an element of the RRC signaling.

The following focuses on an RRC layer and a PDCP layer that are related to embodiments of this application. The RRC layer is mainly responsible for a control plane process related to a radio access network, and main functions of the RRC layer include but are not limited to the following functions:
- system information broadcast related to the AS and the NAS;
- transmitting a paging message from the core network device or the access network device, to notify the terminal of a received connection request; and when the terminal is not connected to a cell and is in an RRC idle (RRC_IDLE) state, the system pages the terminal;
- establishing, maintaining, and releasing an RRC connection between the terminal and the access network device, including: addition, modification, and release of carrier aggregation (carrier aggregation, CA) and dual connection (dual connection, DC);
- a security function, including key management;
- establishing, configuring, maintaining, and releasing a signaling radio bearer (signaling radio bearer, SRB) and a data radio bearer (data radio bearer, DRB);
- mobility management, including but not limited to handover, context information transfer, cell selection and reselection, control of cell selection and reselection, and inter-system mobility;
- a quality of service (quality of service, QoS) management function;
- measurement reporting and reporting control: establishing, modifying, and delivering measurement information, and receiving a measurement report;
- detection and recovery of a radio link failure (radio link failure, RLF); and
- forwarding of a NAS message.

Main functions of the PDCP layer include but are not limited to: adding a sequence number (sequence number, SN) to a data unit, compressing a network protocol (internet protocol, IP) header, performing integrity protection, encrypting, adding a PDCP header to data, and retransmitting data. Data processing at a PDCP layer of a receiving end is a reverse order of that of a transmitting end: processes such as PDCP header removal, decryption, integrity verification, reordering, and header decompression.

In some deployments, an access network node may include a CU and a DU. The CU may implement a part of protocol layer functions of the access network device, and the DU may implement a part of protocol layer functions of the access network device. As shown in FIG. 4, a CU may be responsible for processing a non-real-time protocol and service. For example, the CU may implement functions of an RRC layer, an SDAP layer, and a PDCP layer. A DU may be responsible for processing a physical layer protocol and a real-time service. For example, functions of an RLC layer, a MAC layer, and a PHY layer may be implemented. One DU may be connected to only one CU or a plurality of CUs, and one CU may be connected to a plurality of DUs. The CU and the DU may communicate with each other through an F1 interface. The CU may further include a CU-CP and a CU-UP, as shown in FIG. 5. The CU-CP may be responsible for a control plane function, for example, implementing an RRC layer and a PDCP layer control plane (PDCP-C) function. The CU-UP may be responsible for a user plane function, for example, implementing an SDAP layer and a PDCP layer user plane (PDCP-U) function. The CU-CP and the CU-UP communicate with each other through an E1 interface. On behalf of the access network device, the CU-CP may communicate with a core network through an NG interface, and communicate with the DU through an F1-C interface. The CU-UP may communicate with the DU through an F1-U interface. However, this application is not limited thereto.

A specific technology and a specific device form that are used by the terminal are not limited in this application. It should be understood that in this application, "sending information/data to... (for example, a terminal)" may be understood as that a destination end of the information is the terminal, and may include directly or indirectly sending the information/data to the terminal. "Receiving information/data from... (for example, a terminal)" may be understood as that a source end of the information is the terminal, and may include directly or indirectly receiving the information/data from the terminal. The information/data may undergo necessary processing, for example, changing a format, between the source end for sending the information/data and the destination end. However, the destination end may understand valid information/data from the source end. A similar expression in this application may be understood similarly, and details are not described herein.

In this application, "sending information/data" indicates only a transferring direction of the information/data. The direction includes direct sending through an air interface, and also includes indirect sending by a processing unit through an air interface. "Sending" may also be understood as "outputting" of a module interface. "Receiving information/data" indicates only a transferring direction of the information/data. The direction includes direct receiving through an air interface, and also includes indirect receiving by a processing unit through an air interface. "Receiving" may also be understood as "inputting" of a module interface.

The following describes related technologies and terms in embodiments of this application.

### I. Data security protection

The data security protection includes encryption protection and integrity protection, which are separately described below.

### 1. Data encryption protection

The data encryption protection means that a data transmitting end performs, using a key stream, conversion on to-be-sent data, and a data receiving end performs, using a same parameter, inverse conversion to restore the data. In this way, the data is transmitted in ciphertext over an air interface, thereby enhancing data transmission security.

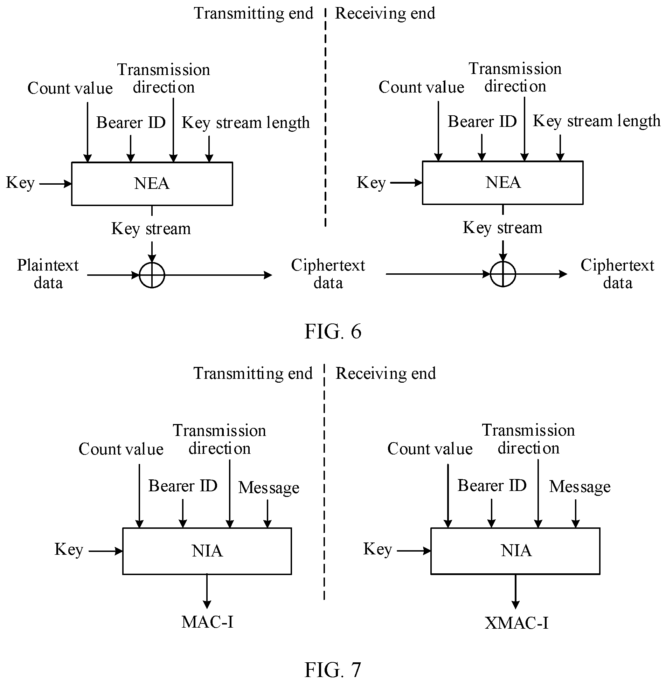

Encryption protection in a 5G system is used as an example. As shown in FIG. 6, a PDCP layer may determine an encryption algorithm (NR encryption algorithm, NEA) based on a higher-layer parameter. The encryption algorithm includes an NEA0, an NEA1, an NEA2, and an NEA3. An input parameter of the encryption algorithm includes an encryption key, a PDCP packet count value (Count), a bearer identifier (bearer identifier, bearer ID), a transmission direction (Direction), and a required key stream length (Length). A transmission direction 0 indicates uplink, that is, from UE to a gNB. A transmission direction 1 indicates downlink, that is, from the gNB to the UE. The transmitting end generates a key stream based on the encryption algorithm and the input parameter, and a ciphertext data stream is generated after an exclusive OR operation is performed on the key stream and an input plaintext data stream. At the receiving end, the same key stream is generated using the same input parameter, and restoring to the plaintext data stream is performed after the exclusive OR operation is performed on the key stream and the ciphertext data stream.

The uplink and the downlink respectively correspond to one PDCP packet count value. A total length of the count value is 32 bits, and the count value includes a hyper frame number (hyper frame number, HFN) as a high-order bit and a PDCP SN as a low-order bit. Only the PDCP SN is added to a PDU for transmission. The HFN is maintained by the transmitting end and the receiving end. A length of the HFN is: 32 - length of the PDCP SN. When the PDCP packet count value corresponding to the uplink or the downlink is flipped, a key update is triggered to prevent generation of a repeated key stream.

### 2. Data integrity protection

Air interface integrity protection refers to obtaining a message authentication code for integrity (message authentication code for integrity, MAC-I) by using regularly changing parameters and transmitted data and through calculation according to a specific rule. During receiving, an expected message authentication code for integrity (expected message authentication code for integrity, XMAC-I) is obtained using the same parameters and through calculation according to the same rule. Authentication is performed on the MAC-I and the XMAC-I, to determine whether data receiving is complete, thereby implementing the data integrity protection.

Using integrity protection in a 5G system as an example, as shown in FIG. 7, a PDCP layer may determine an integrity protection algorithm (NR integrity algorithm, NIA) based on a higher-layer parameter. The integrity protection algorithm includes an NIA0, an NIA1, an NIA2, and an NIA3. An input parameter of the integrity protection algorithm includes an integrity protection key, a PDCP packet count value (Count), a bearer ID, a transmission direction, and a message on which the integrity protection is to be performed. The transmitting end performs calculation to obtain a 32-bit MAC-I (using a 128-bit NIA algorithm as an example) based on the input parameter and the integrity protection algorithm. Then, the MAC-I is appended to the message when the message is sent. The receiving end uses the same manner to calculate an XMAC-I of the received message, and compares the MAC-I with the XMAC-I to verify message integrity.

### II. Hierarchical key derivation

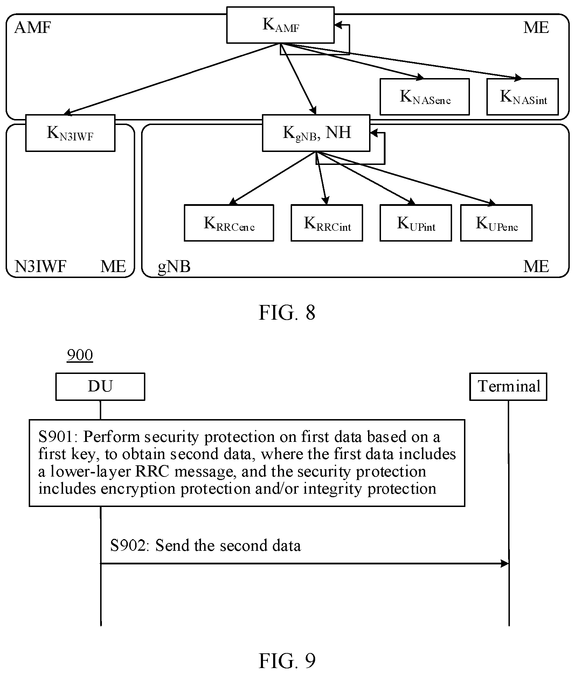

Keys are important inputs for the encryption algorithm and the integrity protection algorithm. Keys for encryption protection and integrity protection comply with a hierarchical key derivation mechanism. FIG. 8 is a diagram of key derivation in a 5G system. Table 1 lists various keys and derivation manners.

**Table 1**

| | |
|---|---|
| KNASint, KNASenc | NAS integrity protection key and encryption key. |
| | • K_{NASint}: derived by mobile equipment (mobile equipment, ME) and an AMF from K_{AMF}, and used to perform integrity protection on NAS signaling. |
| | • K_{NASenc}: derived by the ME and the AMF from K_{AMF}, and used to perform encryption on the NAS signaling. |
| K_{gNB} | Access stratum key, derived by the ME and the AMF from K_{AMF}. |
| NH | Next hop parameter (next hop, NH), obtained by UE and the AMF through chain derivation. In other words, a NH generated this time is used to generate a next NH, so that the NH can be provided from the AMF to a gNodeB in a forward security manner for vertical key derivation during mobile handover. |
| KRRCint | Integrity protection key of an RRC message. |
| KRRCenc | Encryption key of an RRC message. |
| KUPint | Integrity protection key of a user plane. |
| KUPenc | Encryption key of a user plane. |
| KN3IWF | Key derived by the ME and the AMF from K_{AMF}, for non-3GPP access. |

The UE includes a USIM (universal subscriber identity module) and the mobile equipment (ME). The USIM provides user identity identification, and the ME provides applications and services, including deriving keys of a NAS layer and an AS layer.

The gNB performs lifecycle management on keys, for example, generating or updating keys, based on the access stratum key K_{gNB}, a security algorithm, and the hierarchical key derivation mechanism. Currently, a CU of an access network device may generate an RRC message and send the RRC message to a terminal. Each radio bearer (radio bearer, RB) other than an SRB0 corresponds to one PDCP entity, and the SRB0 does not correspond to a PDCP entity. The encryption protection and the integrity protection are performed on the RRC message at a PDCP layer. When a DU determines to configure the terminal, the DU needs to encapsulate configuration information in an RRC container, and the CU transparently transmits the configuration information to the terminal. In other words, the DU first sends the configuration information to the CU, and the CU encapsulates the configuration information into an RRC message and sends the RRC message to the terminal. A case in which the DU configures the terminal may include but is not limited to the following cases:

-The DU configures cell group information for the terminal, where the cell group information is for configuring a master cell group or a secondary cell group, and the cell group includes one MAC entity, one group of logical information associated with an RLC entity, one special cell, and one or more secondary cells.

-The DU performs determining and indicates a determining result to the terminal. For example, the DU determines a target cell based on a layer 1 (layer 1, L1) measurement result, or the DU infers a prediction result based on artificial intelligence (artificial Intelligence, Al)/machine learning (machine learning, ML), and uses the prediction result as the determining result.

In this application, a network side may send an RRC message to the terminal. The lower-layer RRC message may be information that is determined or generated by the DU and that requires the encryption protection and/or the integrity protection; or the lower-layer RRC message may be information related to configuration information of at least one layer of an RLC layer, a MAC layer, and a PHY layer; or the lower-layer RRC message may be information that is related to at least one of an RLC layer, a MAC layer, and a PHY layer and that requires the encryption protection and/or the integrity protection; or the lower-layer RRC message may be information that requires the encryption protection and/or the integrity protection at one of an RLC layer, a MAC layer, and a PHY layer. The terminal may also send an RRC message to the network side. The lower-layer RRC message may be information related to configuration information of at least one layer of an RLC layer, a MAC layer, and a PHY layer; or the lower-layer RRC message may be information that is related to at least one of an RLC layer, a MAC layer, and a PHY layer and that requires the encryption protection and/or the integrity protection; or the lower-layer RRC message may be information that requires the encryption protection and/or the integrity protection at one of an RLC layer, a MAC layer, and a PHY layer.

According to the foregoing description, the lower-layer RRC message needs to be transmitted by the DU to the CU, and is encapsulated by the CU and then sent to the terminal via the DU. As a result, a transmission delay of the lower-layer RRC message is high, and a problem of low transmission efficiency exists. This is caused mainly because the DU does not have a security protection function. Therefore, this application proposes that a function of the DU is enhanced, so that the DU has the security protection function. The DU can perform security protection on the lower-layer RRC message and then send the lower-layer RRC message to the terminal, so that the transmission delay of the lower-layer RRC message can be reduced, and the transmission efficiency can be improved.

FIG. 9 is a schematic flowchart of a data security protection method 900 according to an embodiment of this application. The method 900 includes but is not limited to the following steps S901 and S902.

S901: A DU performs security protection on first data based on a first key, to obtain second data, where the first data includes a lower-layer RRC message, and the security protection includes encryption protection and/or integrity protection.

For example, the lower-layer RRC message may be used for configuring a cell group for a terminal, or the lower-layer RRC message may be used for notifying the terminal of a determining result determined by the DU. For example, the determining result may be a target cell of the terminal that is determined based on an L1 measurement result. However, this application is not limited thereto. Alternatively, the lower-layer RRC message may be an RRC message that is determined or generated by an RLC layer, a MAC layer, or a PHY layer, that is used for another function, and that requires the security protection.

When data includes the lower-layer RRC message, the DU performs the security protection on the data and then sends the data to the terminal. Specifically, the DU performs the security protection on the first data based on the first key, to obtain the second data. A manner in which the DU obtains the first key may include but is not limited to the following manners.

In an implementation, a CU sends first information to the DU, where the first information indicates the first key, and the first key may be referred to as a DU key, or may be referred to as a DU root key (the root key is used to derive an encryption key and/or an integrity protection key). Correspondingly, the DU receives the first information from the CU, and determines the first key based on the first information. The first key is used by the DU to generate the encryption key and/or the integrity protection key, and the encryption key is different from the integrity protection key.

If the first key is used to derive the encryption key, the DU may perform the encryption protection on the first data based on the encryption key derived from the first key; and/or if the first key is used to derive the integrity protection key, the first DU may perform the integrity protection on the first data based on the integrity protection key derived from the first key. If the first key is used to derive both the encryption key and the integrity protection key, the DU may obtain the encryption key and the integrity protection key through derivation from the first key. The DU may perform encryption on the first data based on the encryption key derived from the first key, to obtain third data; and then perform the integrity protection on the third data based on the integrity protection key derived from the first key, to obtain the second data.

The first key may be an access stratum key, or may be derived/generated by the CU based on the access stratum key and a first parameter. The first parameter includes one or more of the following:
a DU key count value, an F1AP identifier allocated by the DU to the terminal, an F1AP identifier allocated by the CU to the terminal, a cell-radio network temporary identifier (cell-radio network temporary identifier, C-RNTI) of the terminal, a radio bearer identifier corresponding to the first data, or a logical channel identifier corresponding to the first data.

For example, the CU may maintain one DU key count value. The CU generates the first key based on the access stratum key and the DU key count value, and sends the first key to the DU by using the first information, so that the DU performs the security protection on the first data based on the first key.

Specifically, the CU may maintain the DU key count value in an access stratum security context. The CU sets the DU key count value to 0 when establishing the access stratum context, and the DU key count value increases by 1 each time the CU calculates the first key. When the DU key count value is flipped, the CU triggers an update of the access stratum key, to avoid repetition of the first key.

The terminal generates the first key in a same manner. When the terminal needs to generate the first key, the CU sends eighth information to the terminal, where the eighth information indicates a current DU key count value. The terminal receives the eighth information from the CU, and determines the current DU key count value based on the eighth information, so that the terminal generates the first key based on the access stratum key and the DU key count value, for the terminal to perform security protection related to the first data, for example, decryption and/or integrity protection authentication of the second data obtained by the terminal.

For another example, the first parameter includes but is not limited to one or more of a DU key count value, an F1AP identifier allocated by the DU to the terminal, an F1AP identifier allocated by the CU to the terminal, a C-RNTI of the terminal, a radio bearer ID corresponding to the first data, or a logical channel identifier corresponding to the first data. The CU may generate the first key based on the access stratum key and the first parameter, and send the first key to the DU by using the first information, so that the DU performs the security protection on the first data based on the first key. Correspondingly, the CU sends eighth information to the terminal, where the eighth information indicates the first parameter, so that the terminal can generate the first key based on the same parameter, to derive, based on the first key, an encryption key and/or an integrity protection key corresponding to the lower-layer RRC message, for the terminal to perform the security protection on the first data.

In another implementation, the DU generates the first key based on an access stratum key and a first parameter. The first parameter includes one or more of the following:
a DU key count value, an F1AP identifier allocated by the DU to the terminal, an F1AP identifier allocated by a CU to the terminal, a C-RNTI of the terminal, a radio bearer identifier corresponding to the first data, or a logical channel identifier corresponding to the first data.

For example, the CU may send twelfth information to the DU, where the twelfth information includes the access stratum key, and the DU may generate the first key based on the access stratum key and the first parameter. If the first parameter includes the DU key count value, the twelfth information further includes the DU key count value. The DU obtains an encryption key and/or an integrity protection key through derivation from the first key generated by the DU. The DU may perform the security protection on the first data based on the integrity protection key derived from the first key, to obtain the second data; and/or the DU performs the security protection on the first data based on the encryption protection key derived from the first key, to obtain the second data. If the first key is used to derive both the encryption key and the integrity protection key, the DU may obtain the encryption key and the integrity protection key through derivation from the first key. The DU may perform encryption on the first data based on the encryption key derived from the first key, to obtain third data; and then perform the integrity protection on the third data based on the integrity protection key derived from the first key, to obtain the second data.

In the foregoing descriptions, the DU may obtain the first key from the CU, or the DU may generate the first key, so that the DU can directly send data to the terminal after performing, based on the first key, the security protection on the data including the lower-layer RRC message. It is not needed that the data is transferred to the CU, and the CU performs the security protection and returns the data to the DU, and then the data is sent to the terminal. This can reduce a transmission delay of the lower-layer RRC message, and improve transmission efficiency.

Optionally, in an alternative implementation of S901, the DU may obtain an encryption key and/or an integrity protection key of the DU from the CU. The DU performs encryption on the first data based on the encryption key, and/or the DU may perform the integrity protection on the first data based on the integrity protection key, to obtain the second data.

The CU may obtain the encryption key and/or the integrity protection key of the DU based on the first key. For example, the first key may be an access stratum key, or may be derived/generated by a CU based on the access stratum key and a first parameter. After the CU derives the encryption protection key and/or the integrity protection key of the DU based on the first key, the CU sends the encryption protection key and/or the integrity protection key to the DU, so as to perform the encryption protection and/or the integrity protection on the first data. When generating the encryption key and the integrity protection key of the DU, the CU may further perform derivation by referring to another parameter in addition to the first key, so that the encryption key is different from the integrity protection key. This is not limited in this application.

S902: The DU sends the second data to the terminal.

Correspondingly, the terminal receives the second data from the DU. The terminal may determine that the second data carries the lower-layer RRC message, and the terminal performs security protection on the second data based on the first key, to obtain the first data. For a manner in which the terminal obtains the first key, refer to the foregoing descriptions.

The terminal may obtain the encryption key and/or the integrity protection key through derivation from the first key. That the terminal performs the security protection on the second data based on the first key, to obtain the first data includes: The terminal performs decryption on the second data based on the encryption key derived from the first key, to obtain the first data; and/or the terminal performs integrity authentication on the second data based on the integrity protection key derived from the first key, to obtain the first data. If the first key is used to derive both the encryption key and the integrity protection key, the terminal may obtain the encryption key and the integrity protection key through derivation from the first key. The terminal may perform the integrity authentication on the second data based on the integrity protection key derived from the first key, to obtain the third data; and then perform decryption on the third data based on the encryption key derived from the first key, to obtain the first data.

A manner in which the terminal determines that the second data is corresponding to the first key may include but is not limited to the following implementations.

In a first implementation, the terminal may determine the first key based on key information associated with a radio bearer used to transmit the lower-layer RRC message.

The DU associates/maps, to a first logical channel, the second data including the lower-layer RRC message. The DU maps the first logical channel to a radio bearer used to transmit the second data. The radio bearer may be a signaling radio bearer SRB or a data radio bearer DRB. Further, the radio bearer may be a dedicated radio bearer, and the dedicated radio bearer may be understood as a radio bearer used to transmit only the second data including the lower-layer RRC message, or as a radio bearer used to transmit only the lower-layer RRC message. The terminal may determine, based on information about the radio bearer used to transmit the second data, to perform the security protection on the second data based on the first key.

The CU may send tenth information to the terminal, where the tenth information indicates the information about the radio bearer corresponding to the second data, and the information about the radio bearer includes one or more of radio bearer identification information, security configuration information that is corresponding to the radio bearer and that includes key information, and identification information of a logical channel mapped to/associated with the radio bearer. The terminal determines, based on the tenth information, key information associated with the radio bearer corresponding to the lower-layer RRC message or the second data, and may determine, based on the key information, that the radio bearer is associated with the first key.

An RLC layer of the DU associates/maps a logical channel corresponding with/to the lower-layer RRC message to a corresponding radio bearer. One RLC entity corresponds to one logical channel of one terminal, and one logical channel corresponds to one radio bearer. The CU sends RLC bearer configuration information to the terminal to indicate a correspondence between a radio bearer identifier and a logical channel identifier. For example, the RLC bearer configuration information may be denoted as RLC-BearerConfig, and the RLC bearer configuration information may be included in the foregoing tenth information, or may be included in other information. The CU indicates, to the terminal by using RLC-BearerConfig, an association relationship between the first logical channel and the radio bearer used to transmit the lower-layer RRC message. For example, RLC-BearerConfig may be represented as follows:

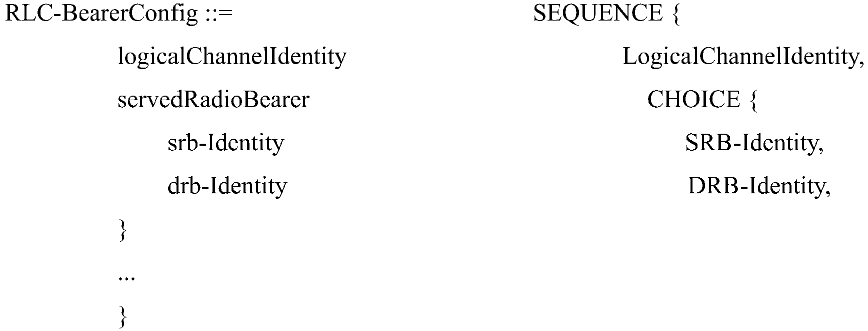

The identification information of the logical channel (that is, the foregoing logicalChannelIdentity) indicates a logical channel identifier LogicalChannelIdentity, for example, the identifier is an identifier of the first logical channel; and radio bearer identification information associated with the logical channel is configured by using service bearer information (that is, the foregoing servedRadioBearer), where the radio bearer may be an SRB or may be a DRB. If the first logical channel is associated with the SRB, servedRadioBearer indicates, by using srb-Identity, an identifier SRB-Identity of the SRB associated with the first logical channel. Alternatively, if the first logical channel is associated with the DRB, servedRadioBearer indicates, by using drb-Identity, an identifier DRB-Identity of the DRB associated with the first logical channel. The RB associated with the first logical channel is the radio bearer corresponding to the lower-layer RRC message.

The terminal may determine, based on the RLC bearer configuration information from the CU, the logical channel associated with/mapped to the radio bearer corresponding to the lower-layer RRC message, or may determine the radio bearer associated with/mapped to the logical channel corresponding to the lower-layer RRC message. The foregoing RLC-BearerConfig may further include other information that is not shown. This is not limited in this application.

The tenth information may include dedicated RB identification information, and the terminal may determine, based on the dedicated RB information, that a key corresponding to the radio bearer is the first key. For another example, the tenth information may include identification information and security configuration information of an RB, and the RB may be an SRB or a DRB. If the security configuration information indicates that the key corresponding to the radio bearer is the first key, the terminal may determine, based on the tenth information, that the key corresponding to the radio bearer is the first key.

After receiving the second data, the terminal may determine the first logical channel associated with/mapped to the second data, map the first logical channel to a corresponding radio bearer (RB), and indicate, based on the tenth information, RB identification information and key information used for the RB; or the terminal may determine, based on the dedicated RB identification information, to perform the security protection on the second data based on the first key, so as to obtain the first data.

In a second implementation, the terminal may determine the first key based on key information associated with a first logical channel associated with/mapped to the second data, where the first logical channel is a logical channel corresponding to the lower-layer RRC message.

Optionally, the CU may send ninth information to the terminal, where the ninth information indicates logical channel information corresponding to the lower-layer RRC message, and the logical channel information may include identification information of the first logical channel. Optionally, the CU may notify, by using the ninth information, the terminal that the first logical channel is a dedicated logical channel corresponding to the lower-layer RRC message. Alternatively, the logical channel information may include the identification information of the first logical channel and indication information indicating that the first logical channel is associated with the first key. The terminal determines, based on the ninth information, that the first logical channel is the logical channel corresponding to the lower-layer RRC message. After receiving the second data, the terminal determines, based on the second data being associated with/mapped to the first logical channel, to perform the security protection on the second data based on the first key, so as to obtain the first data.

Optionally, the DU allocates the first logical channel as the logical channel corresponding to the lower-layer RRC message. The DU sends second information to the CU, where the second information indicates identification information of a logical channel corresponding to the lower-layer RRC message (that is, the identification information of the logical channel indicates an identifier of the first logical channel), and the second information may further indicate that the first logical channel is associated with the first key. After the CU determines, based on the second information, that the first logical channel is the logical channel of the lower-layer RRC message, the CU may send the ninth information to the terminal, to notify the terminal.

Optionally, the logical channel may be a dedicated logical channel for transmission of the lower-layer RRC message. The dedicated logical channel may be a predefined rule or a consensus between the DU and the CU, and the DU does not need to send the second information to the CU to indicate information about the first logical channel. The dedicated logical channel may be a predefined rule or a consensus between the DU and UE, the DU does not need to send the second information to the CU, and the CU does not need to send the ninth information to the UE.

In a third implementation, a header field of the second data includes third information, and the third information indicates that the second data includes the lower-layer RRC message, or indicates that the second data is associated with the first key or the first key is used for the second data. Encryption and/or integrity protection are/is not performed on the header field. The header field may be a PDCP header field (if the DU has a PDCP entity/function), or may be an RLC header field or a MAC header field.

For example, the terminal receives the second data, obtains the third information included in the header field of the second data, and indicates, based on the third information, that the second data includes the lower-layer RRC message; or determines, based on the third information, that the first key is used for the second data, so as to determine to perform the security protection on the second data based on the first key, to obtain the first data.

According to the foregoing solution, the DU may perform, based on the first key, the security protection on the first data including the lower-layer RRC message, and perform sending to the terminal. In this way, a transmission delay can be reduced while security is ensured.

In this embodiment of this application, that the DU performs the security protection on the first data based on the first key, to obtain the second data may be specifically: The DU performs the security protection on the first data based on the first key by using a first security algorithm, to obtain the second data. The first security algorithm is specifically a security algorithm corresponding to the lower-layer RRC message, and may also be referred to as a security algorithm used by the DU. For example, the security protection may include encryption protection, and the first security algorithm includes an encryption protection algorithm corresponding to the lower-layer RRC message or an encryption protection algorithm used by the DU; and/or the security protection may include integrity protection, and the first security algorithm includes an integrity protection algorithm corresponding to the lower-layer RRC message or an integrity protection algorithm used by the DU.

A manner in which the DU obtains the first security algorithm includes but is not limited to the following two implementations.

In an implementation, the DU determines the first security algorithm based on a security capability supported by the terminal.

The security capability supported by the terminal includes a security algorithm capability supported by the terminal, and the terminal may report the security capability supported by the terminal to the CU. For example, the terminal is preconfigured with one or more security algorithms, and the terminal supports the security protection by using the one or more security algorithms. Alternatively, the terminal may be preconfigured with a capability parameter related to the security algorithm supported by the terminal.

The CU may send fourth information to the DU, where the fourth information indicates the security capability supported by the terminal. The DU determines, based on the fourth information, the security capability supported by the terminal, and then determines the first security algorithm based on the security capability supported by the terminal. Alternatively, the DU may obtain, from the terminal, the security capability supported by the terminal, and determine the first security algorithm. Alternatively, the DU may determine the first security algorithm based on a predefined minimum security capability supported by the terminal.

The DU may determine, in a security algorithm set, the first security algorithm corresponding to the security capability supported by the terminal. The security algorithm set may be predefined locally in the DU, or may be obtained by the DU from the CU. Security algorithms in the security algorithm set may be sorted based on priorities, or may not be configured with priorities.

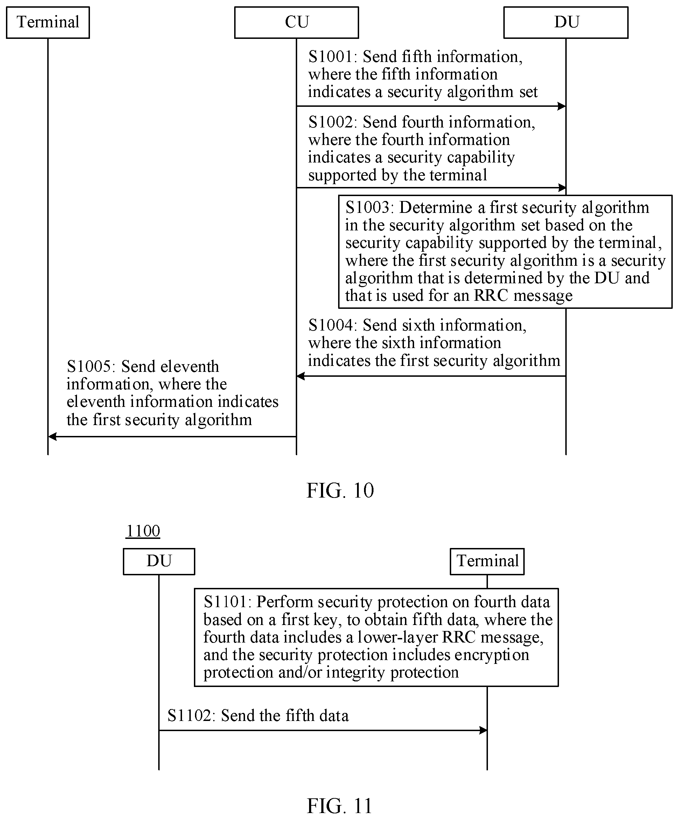

For example, FIG. 10 is a schematic flowchart of a DU obtaining a security algorithm set from a CU, and determining, based on a security capability that is supported by a terminal and that is indicated by the CU, a first security algorithm corresponding to a lower-layer RRC message. Specifically, the following S1001 to S1005 are included but are not limited thereto.

S1001: The CU sends fifth information to the DU, where the fifth information indicates the security algorithm set.

Correspondingly, the DU receives the fifth information from the CU, and determines the security algorithm set based on the fifth information.

For example, the CU may configure the security algorithm set for the DU when setting up an F1 interface with the DU. For example, security algorithms in the security algorithm set may be sorted based on priorities, for example, sorted in ascending order of the priorities or descending order of the priorities, or may not be configured with priorities. However, this application is not limited thereto. Alternatively, the CU may configure the security algorithm set for the DU after setting up the F1 interface with the DU

S1002: The DU sends fourth information to the CU, where the fourth information indicates the security capability supported by the terminal.

Correspondingly, the DU receives the fourth information from the CU, and determines, based on the fourth information, the security capability supported by the terminal. The CU may send the fourth information to the DU after obtaining the security capability supported by the terminal. Alternatively, the CU may send the fourth information to the DU in response to a terminal capability information request of the DU. This is not limited in this application.

S1003: The DU determines the first security algorithm in the security algorithm set based on the security capability supported by the terminal, where the first security algorithm is a security algorithm used for the lower-layer RRC message.

In a case in which a plurality of security algorithms supported by the terminal exist in the security algorithm set, and priorities are configured for the security algorithms in the security algorithm set, the DU selects a security algorithm with a highest priority from the plurality of security algorithms supported by the terminal, where the security algorithm with the highest priority is the first security algorithm. Alternatively, the DU may select, based on an implementation, a security algorithm from the plurality of security algorithms supported by the terminal as the first security algorithm.

S1004: The DU sends sixth information to the CU, where the sixth information indicates the first security algorithm.

After determining the first security algorithm, the DU notifies the CU by using the sixth information. Correspondingly, after receiving the sixth information and determining that the first security algorithm is used for the lower-layer RRC message, the CU performs S1005: The CU sends, to the terminal, eleventh information indicating the first security algorithm, and the terminal determines, based on the eleventh information, the security algorithm corresponding to the lower-layer RRC message. In this manner, the DU determines, based on the security capability supported by the terminal, to use the first security algorithm, and reaches a consensus with the terminal. In this way, the DU performs security protection on the lower-layer RRC message by using the first security algorithm, and then sends the lower-layer RRC message to the terminal, so that a transmission delay can be reduced while security is ensured.

In another implementation, the CU may determine that the first security algorithm is used for the security protection of the lower-layer RRC message, and the CU sends seventh information to the DU and sends the eleventh information to the terminal, to separately notify the DU and the terminal that the first security algorithm is used for the security protection of the lower-layer RRC message, so that the DU and the terminal reach a consensus.

The foregoing describes a manner in which the DU performs the security protection on the lower-layer RRC message and then sends the lower-layer RRC message to the terminal when a network side sends the lower-layer RRC message to the terminal, and a manner in which the DU obtains the security algorithm corresponding to the lower-layer RRC message. Alternatively, the terminal may send the lower-layer RRC message to the network side. The following describes a manner in which the terminal performs the security protection on the lower-layer RRC message and then sends the lower-layer RRC message to the network side when the terminal sends the lower-layer RRC message to the network side, and a manner in which the terminal obtains the security algorithm corresponding to the lower-layer RRC message.

FIG. 11 is a schematic flowchart of a data security protection method 1100 according to an embodiment of this application. The method 1100 includes but is not limited to the following steps S1101 and S1102.

S1101: UE performs security protection on fourth data based on a first key, to obtain fifth data, where the fourth data includes a lower-layer RRC message, and the security protection includes encryption protection and/or integrity protection.

For example, the lower-layer RRC message may indicate request information, configuration information, or assistance information from at least one of an RLC layer, a MAC layer, and a PHY layer of a terminal. However, this application is not limited thereto.

The terminal performs the security protection on the fourth data based on the first key, to obtain the fifth data. A network side and the terminal derive/generate the first key in a same manner. A manner in which the terminal obtains the first key may include but is not limited to the following manners.

In an implementation, the first key may be an access stratum key, or may be derived/generated based on the access stratum key and a first parameter. The first parameter includes one or more of the following:
a DU key count value, an F1AP identifier allocated by a DU to the terminal, an F1AP identifier allocated by a CU to the terminal, a cell-radio network temporary identifier (cell-radio network temporary identifier, C-RNTI) of the terminal, a radio bearer identifier corresponding to the fourth data, or a logical channel identifier corresponding to the fourth data.

For example, the first parameter is the DU key count value. When the terminal needs to generate the first key, the CU sends eighth information to the terminal, where the eighth information indicates a current DU key count value. The terminal receives the eighth information from the CU, and determines the current DU key count value based on the eighth information, so that the terminal generates the first key based on the access stratum key and the DU key count value, for the terminal to perform security protection related to the fourth data, for example, for the terminal to perform encryption and/or integrity protection on the fourth data to obtain the fifth data.

For another example, the first parameter includes but is not limited to one or more of the DU key count value, the F1AP identifier allocated by the DU to the terminal, the F1AP identifier allocated by the CU to the terminal, the C-RNTI of the terminal, the radio bearer ID corresponding to the fourth data, or the logical channel identifier corresponding to the fourth data. The CU sends the eighth information to the terminal, where the eighth information indicates the first parameter, so that the terminal can generate the first key based on the same parameter, to derive, based on the first key, an encryption key and/or an integrity protection key corresponding to the lower-layer RRC message, for the terminal to perform the security protection on the fourth data.

If the first key is used to derive the encryption key, the terminal performs encryption on the fourth data based on the encryption key; and/or if the first key is used to derive the integrity protection key, the terminal performs the integrity protection on the fourth data based on the integrity protection key, to obtain the fifth data. Specifically, if the first key is used to derive both the encryption key and the integrity protection key, the terminal may perform encryption on the fourth data based on the encryption key derived from the first key, to obtain the sixth data; and then perform the integrity protection on the sixth data based on the integrity protection key derived from the first key, to obtain the fifth data.

S1102: The terminal sends the fifth data to the DU.

Correspondingly, the DU receives the fifth data from the terminal. The DU may determine that the fifth data carries the lower-layer RRC message, and the DU may perform the security protection on the fifth data based on the first key, to obtain the fourth data.

That if the DU may obtain the encryption key and/or the integrity protection key through derivation from the first key, the DU performs the security protection on the fifth data based on the first key, to obtain the fourth data includes: If the first key is used to derive the integrity protection key, the DU performs integrity authentication on the fifth data based on the integrity protection key derived from the first key, to obtain the fourth data; and/or if the first key is used to derive the encryption key, the DU performs integrity authentication on the sixth data based on the encryption key derived from the first key, to obtain the fourth data. If the first key is used to derive both the encryption key and the integrity protection key, the DU obtains the encryption key and the integrity protection key through derivation from the first key. The DU may perform integrity authentication on the fifth data based on the integrity protection key derived from the first key, to obtain the sixth data; and then the terminal performs decryption on the sixth data based on the encryption key derived from the first key, to obtain the fourth data.

A manner in which the terminal indicates, to the DU, that the fifth data is corresponding to the first key may include but is not limited to the following implementations.

In an implementation, the terminal may associate/map the fifth data with/to an indicated radio bearer.

The terminal may receive tenth information from the CU, where the tenth information indicates information about a radio bearer corresponding to the lower-layer RRC message, and the information related to the radio bearer includes one or more of radio bearer identification information, security configuration information that is corresponding to the radio bearer and that includes key information, and information about a logical channel mapped to/associated with the radio bearer, as described in the embodiment shown in FIG. 9. A logical channel corresponding to the lower-layer RRC message is a first logical channel. The terminal may associate the fifth data with the first logical channel, and associate/map the first logical channel with/to the radio bearer indicated by the tenth information, or associate, based on the key information corresponding to the radio bearer indicated by the tenth information, the fifth data with the radio bearer indicated by the tenth information, and associate/map the radio bearer with/to the first logical channel, to send the fifth data to the DU. In this way, the DU can determine, based on the radio bearer of the fifth data, that the fifth data is corresponding to the first key.

In another implementation, the terminal may associate/map the fifth data with/to a first logical channel, where the first logical channel is a logical channel corresponding to the lower-layer RRC message.

Optionally, the first logical channel may be a dedicated logical channel for transmission of the lower-layer RRC message. The dedicated logical channel may be a predefined rule or consensus between the DU and the UE. The UE directly associates/maps the fifth data with/to the first logical channel.

Optionally, the terminal may receive ninth information from the CU, where the ninth information indicates logical channel information corresponding to the lower-layer RRC message, and the logical channel information may include identification information of the first logical channel. Optionally, the CU may notify, by using the ninth information, the terminal that the first logical channel is a dedicated logical channel corresponding to the lower-layer RRC message. Alternatively, the logical channel information may include the identification information of the first logical channel and indication information indicating that the first logical channel is associated with the first key. The terminal determines, based on the ninth information, that the first logical channel is the logical channel corresponding to the lower-layer RRC message. The terminal associates/maps the fifth data with/to the first logical channel, and sends the fifth data to the DU. The DU may determine, based on that the logical channel associated with/mapped to the fifth data is the first logical channel, that the fifth data is corresponding to the first key.

In still another implementation, a header field of the fifth data includes third information, and the third information indicates that the fifth data includes the lower-layer RRC message; or indicates that the fifth data is associated with the first key or the first key is used for the fifth data. Encryption and/or integrity protection are/is not performed on the header field. The header field may be a PDCP header field (if the DU has a PDCP entity/function), or may be an RLC header field or a MAC header field. The terminal sends the fifth data to the DU, so that the DU determines, based on the header field of the fifth data, that the fifth data is corresponding to the first key.

According to the foregoing solution, the terminal may perform, based on the first key, the security protection on the fourth data including the lower-layer RRC message, and send the fourth data to the DU. In this way, a transmission delay can be reduced while security is ensured.

In this embodiment of this application, that the terminal performs the security protection on the fourth data based on the first key, to obtain the fifth data may be specifically: The terminal performs the security protection on the fourth data based on a first key by using the first security algorithm, to obtain the fifth data. The first security algorithm is specifically a security algorithm corresponding to the lower-layer RRC message, and may also be referred to as a security algorithm used by the DU. For example, the security protection may include encryption protection, and the first security algorithm includes an encryption protection algorithm corresponding to the lower-layer RRC message or an encryption protection algorithm used by the DU; and/or the security protection may include integrity protection, and the first security algorithm includes an integrity protection algorithm corresponding to the lower-layer RRC message or an integrity protection algorithm used by the DU.

As described above, the DU or the CU may determine that the security algorithm corresponding to the lower-layer RRC message is the first security algorithm. The CU sends eleventh information to the terminal, where the eleventh information indicates that the first security algorithm is used for the security protection corresponding to the lower-layer RRC message. The terminal performs, based on the eleventh information by using the first security algorithm, the security protection on data including the lower-layer RRC message, so that the DU and the terminal reach a consensus, to implement the security protection on the lower-layer RRC message.

It may be understood that to implement functions in the foregoing embodiments, the access network node (for example, the CU or the DU) and the terminal include corresponding hardware structures and/or software modules for performing various functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

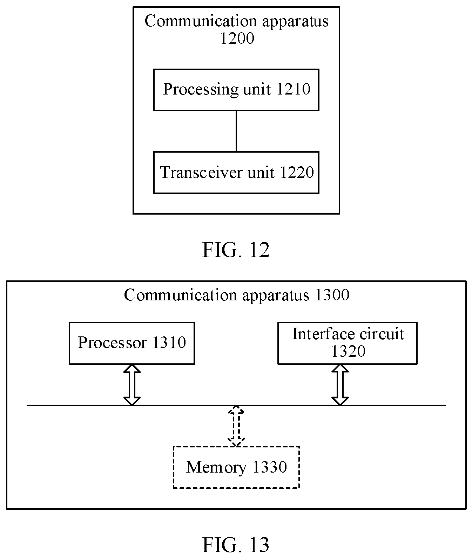

FIG. 12 and FIG. 13 are diagrams of structures of possible communication apparatuses according to embodiments of this application. These communication apparatuses may be configured to implement functions of the terminal or the access network node (for example, the CU or the DU) in the foregoing method embodiments, and therefore can also achieve beneficial effects of the foregoing method embodiments. In embodiments of this application, the communication apparatus may be one of the terminals 120a to 120j as shown in FIG. 1, or the network device 110a or 110b as shown in FIG. 1, or a module (for example, a chip or a chip system) used in the terminal or the network device.

The communication apparatus 1200 includes a transceiver unit 1220, and the transceiver unit 1220 may be configured to receive or send information. The communication apparatus 1200 may further include a processing unit 1210, and the processing unit 1210 may be configured to process instructions or data, to implement a corresponding operation.

It should be further understood that when the communication apparatus 1200 is a chip configured in (or used in) a communication device, the transceiver unit 1220 in the communication apparatus 1200 may be an input/output interface or a circuit of the chip, and the processing unit 1210 in the communication apparatus 1200 may be a processor in the chip.

Optionally, the communication apparatus 1200 may further include a storage unit. The storage unit may be configured to store instructions or data. The processing unit 1210 may execute the instructions or the data stored in the storage unit, to cause the communication apparatus to implement a corresponding operation.

The communication apparatus 1200 may be configured to implement functions of the CU, the DU, or the terminal in the method embodiments shown in FIG. 9, FIG. 10, or FIG. 11.

When the communication apparatus 1200 is configured to implement the function of the DU in the method embodiment shown in FIG. 9, the processing unit 1210 is configured to perform security protection on first data based on a first key, to obtain second data, where the first data includes a radio resource control RRC message determined by the DU, and the security protection includes encryption protection and/or integrity protection; and the transceiver unit 1220 is configured to send the second data to the terminal.

When the communication apparatus 1200 is configured to implement the function of the terminal in the method embodiment shown in FIG. 9, the transceiver unit 1220 is configured to receive the second data, where the second data is obtained by applying security protection to the first data; and the processing unit 1210 is configured to perform the security protection on the second data based on the first key, to obtain the first data, where the first data includes the radio resource control RRC message determined by the distributed unit DU, and the security protection includes encryption protection and/or integrity protection.

When the communication apparatus 1200 is configured to implement the function of the CU in the method embodiment shown in FIG. 9, the processing unit 1210 is configured to determine twelfth information, where the twelfth information is used by the DU to determine the first key, the first key is used for security protection on the RRC message determined by the DU, and the security protection includes security protection and/or integrity protection; the transceiver unit 1220 is configured to send the twelfth information to the DU; and the transceiver unit is further configured to send a first parameter to the terminal, where the first parameter is used by the terminal to determine the first key.

For more detailed descriptions of the foregoing processing unit 1210 and the foregoing transceiver unit 1220, refer to related descriptions in the method embodiment shown in FIG. 8.

It should be understood that the transceiver unit 1220 in the communication apparatus 1200 may be implemented by using a communication interface (for example, a transceiver, a transceiver circuit, an input/output interface, or a pin). When the communication interface is a transceiver, the transceiver may include a receiver and/or a transmitter. The processing unit 1210 in the communication apparatus 1200 may be implemented by using at least one processor, and the processing unit 1210 in the communication apparatus 1200 may alternatively be implemented by using at least one logic circuit. Optionally, the communication apparatus 1200 further includes a storage unit, and the storage unit may be implemented by a memory.

As shown in FIG. 13, a communication apparatus 1300 includes a processor 1310 and an interface circuit 1320. The processor 1310 and the interface circuit 1320 are coupled to each other. It can be understood that the interface circuit 1320 may be a transceiver or an input/output interface. Optionally, the communication apparatus 1300 may further include a memory 1330, configured to: store instructions executed by the processor 1310, store input data required by the processor 1310 to run the instructions, or store data generated after the processor 1310 runs the instructions.

In an implementation, the memory 1330 may alternatively be integrated into the processor 1310, or may be independent of the processor 1310.

When the communication apparatus 1300 is configured to implement the method shown in FIG. 9, FIG. 10, or FIG. 11, the processor 1310 is configured to implement the function of the foregoing processing unit 1210, and the interface circuit 1320 is configured to implement the function of the foregoing transceiver unit 1220.

When the foregoing communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to a network device.

When the foregoing communication apparatus is a module used in the network device, the module of the network device may implement the function of the DU or the CU in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The module in the network device herein may be a baseband chip of the network device, or may be a CU or a DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal. The processor and the storage medium may alternatively exist in the access network device or the terminal as discrete components.

According to the methods provided in embodiments of this application, an embodiment of this application further provides a computer program product. The computer program product includes computer program code. When the computer program code is executed by one or more processors, an apparatus including the processor is caused to perform the methods in embodiments shown in FIG. 9, FIG. 10, or FIG. 11.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, all or some procedures or functions in embodiments of this application are executed. The computer may be a general-purpose computer, a dedicated computer, a computer network, a network device, user equipment, or another programmable apparatus.

According to the methods provided in embodiments of this application, an embodiment of this application further provides a computer-readable storage medium. The computer-readable storage medium stores the foregoing computer program or the foregoing instructions. When the computer program or the instructions are run by one or more processors, an apparatus including the processor is caused to perform the methods in embodiments shown in FIG. 9, FIG. 10, or FIG. 11.

The foregoing computer program or the foregoing instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system, which includes one or more of the foregoing DUs. The system may further include one or more of the foregoing CUs. The system may further include one or more of the foregoing terminals.

In several embodiments provided in this application, it should be understood that the disclosed system, apparatus, and method may be implemented in other manners. For example, the foregoing described apparatus is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A data security protection method, comprising:
performing, by a distributed unit DU, security protection on first data based on a first key, to obtain second data, wherein the first data comprises a lower-layer radio resource control RRC message, and the security protection comprises encryption protection and/or integrity protection; and
sending, by the DU, the second data to a terminal.

2. The method according to claim 1, wherein the method further comprises:
generating, by the DU, the first key based on an access stratum key and a first parameter,
wherein
the first parameter comprises one or more of the following:
a DU key count value, an F1AP identifier allocated by the DU to the terminal, an F1AP identifier allocated by a CU to the terminal, a cell-radio network temporary identifier C-RNTI, a radio bearer identifier corresponding to the first data, or a logical channel identifier corresponding to the first data.

3. The method according to claim 1, wherein the method further comprises:
receiving, by the DU, first information from a central unit CU, wherein the first information indicates the first key.

4. The method according to any one of claims 1 to 3, wherein the first data is corresponding to a first logical channel, and the first logical channel is a logical channel corresponding to the lower-layer RRC message; or a radio bearer associated with the first logical channel is a radio bearer corresponding to the lower-layer RRC message.

5. The method according to claim 4, wherein the method further comprises:
determining, by the DU, that the logical channel corresponding to the lower-layer RRC message is the first logical channel; and
sending, by the DU, second information to the CU, wherein the second information indicates that the logical channel corresponding to the lower-layer RRC message is the first logical channel.

6. The method according to any one of claims 1 to 3, wherein a header field of the second data comprises third information, and the third information indicates that the second data comprises the lower-layer RRC message or indicates that the second data is associated with the first key.

7. The method according to any one of claims 1 to 5, wherein the performing, by the DU, the security protection on the first data based on the first key, to obtain the second data comprises:
performing, by the DU, the security protection on the first data based on the first key by using a first security algorithm corresponding to the security protection, to obtain the second data.

8. The method according to claim 7, wherein the method further comprises:
receiving, by the DU, fourth information from the CU, wherein the fourth information indicates a security capability supported by the terminal; and
determining, by the DU, the first security algorithm based on the security capability supported by the terminal.

9. The method according to claim 8, wherein the method further comprises:
receiving, by the DU, fifth information from the CU, wherein the fifth information indicates a security algorithm set; and
the determining, by the DU, the first security algorithm based on the security capability supported by the terminal comprises:
determining, by the DU, the first security algorithm in the security algorithm set based on the security capability supported by the terminal.

10. The method according to claim 8 or 9, wherein the method further comprises:
sending, by the DU, sixth information to the CU, wherein the sixth information indicates the first security algorithm.

11. The method according to claim 7, wherein the method further comprises:
receiving, by the DU, seventh information from the CU, wherein the seventh information indicates the first security algorithm.

12. A data security protection method, comprising:
receiving, by a terminal, second data, wherein the second data is obtained by applying security protection to the first data; and
performing, by the terminal, security protection on the second data based on a first key, to obtain the first data, wherein the first data comprises a lower-layer radio resource control RRC message, and the security protection comprises encryption protection and/or integrity protection.

13. The method according to claim 12, wherein the method further comprises:
generating, by the terminal, the first key based on an access stratum key and a first parameter,
wherein
the first parameter comprises one or more of the following:
a DU key count value, an F1AP identifier allocated by a DU to the terminal, an F1AP identifier allocated by a CU to the terminal, a cell-radio network temporary identifier C-RNTI, a radio bearer identifier corresponding to the first data, or a logical channel identifier corresponding to the first data.

14. The method according to claim 12, wherein the method further comprises:
receiving, by the terminal, eighth information from a central unit CU, wherein the eighth information indicates the first parameter.

15. The method according to any one of claims 12 to 14, wherein the method further comprises:
receiving, by the terminal, ninth information from the CU, wherein the ninth information indicates that a logical channel corresponding to the lower-layer RRC message is a first logical channel; and
determining, by the terminal, based on the second data comprising data of the first logical channel, to perform the security protection on the second data based on the first key.

16. The method according to any one of claims 12 to 14, wherein the method further comprises:
receiving, by the terminal, tenth information from the CU, wherein the tenth information indicates a radio bearer corresponding to the lower-layer RRC message; and
determining, by the terminal, based on the second data comprising data of a first logical channel, and a radio bearer associated with the first logical channel being the radio bearer corresponding to the lower-layer RRC message, to perform the security protection on the second data based on the first key.

17. The method according to any one of claims 12 to 14, wherein a header field of the second data comprises third information, and the third information indicates that the second data comprises the lower-layer RRC message or indicates that the second data is associated with the first key.

18. The method according to any one of claims 12 to 17, wherein the performing, by the terminal, the security protection on the second data based on the first key, to obtain the first data comprises:
performing, by the terminal, the security protection on the second data based on the first key by using a first security algorithm corresponding to the security protection, to obtain the first data.

19. The method according to claim 17, wherein the method further comprises:
receiving, by the terminal, eleventh information from the CU, wherein the eleventh information indicates the first security algorithm.

20. A data security protection method, comprising:
sending, by a central unit CU, twelfth information to a DU, wherein the twelfth information is used by the DU to determine a first key, the first key is used for security protection on a lower-layer RRC message, and the security protection comprises security protection and/or integrity protection; and
sending, by the CU, a first parameter to a terminal, wherein the first parameter is used by the terminal to determine the first key, and the first parameter comprises one or more of the following:
a DU key count value, an F1AP identifier allocated by the DU to the terminal, an F1AP identifier allocated by the CU to the terminal, a cell-radio network temporary identifier C-RNTI, a radio bearer identifier corresponding to the first data, or a logical channel identifier corresponding to the first data.

21. The method according to claim 20, wherein the method further comprises:
determining, by the CU, the first key based on an access stratum key and the first parameter,
wherein
the twelfth information comprises the first key.

22. The method according to claim 20, wherein the twelfth information comprises an access stratum key, or the twelfth information comprises the access stratum key and the first parameter.

23. The method according to any one of claims 20 to 22, wherein the method further comprises:
receiving, by the CU, second information from the DU, wherein the second information indicates that a logical channel corresponding to the lower-layer RRC message is a first logical channel; and
sending, by the CU, ninth information to the terminal, wherein the ninth information indicates that the logical channel corresponding to the lower-layer RRC message is the first logical channel.

24. The method according to any one of claims 20 to 22, wherein the method further comprises:
sending, by the CU, tenth information to the terminal, wherein the tenth information indicates a radio bearer corresponding to the lower-layer RRC message.

25. The method according to any one of claims 20 to 23, wherein the method further comprises:
sending, by the CU, fourth information to the DU, wherein the fourth information indicates a security capability supported by the terminal;
receiving, by the CU, sixth information from the DU, wherein the sixth information indicates a first security algorithm, and the first security algorithm is an algorithm used for the security protection of the lower-layer RRC message; and
sending, by the CU, eleventh information to the terminal, wherein the eleventh information indicates the first security algorithm.

26. The method according to claim 25, wherein the method further comprises:
sending, by the CU, fifth information to the DU, wherein the fifth information indicates a security algorithm set, and the security algorithm set is used by the DU to determine the first security algorithm.

27. The method according to any one of claims 20 to 23, wherein the method further comprises:
sending, by the CU, seventh information to the DU, wherein the seventh information indicates a first security algorithm, and the first security algorithm is an algorithm used for the security protection of the lower-layer RRC message; and
sending, by the CU, eleventh information to the terminal, wherein the eleventh information indicates the first security algorithm.

28. A communication apparatus, comprising a module configured to perform the method according to any one of claims 1 to 11, or a module configured to perform the method according to any one of claims 12 to 19, or a module configured to perform the method according to any one of claims 20 to 27.

29. A communication apparatus, comprising a processor, wherein the processor is coupled to a memory, the memory is configured to store a computer program, and the processor is configured to execute the computer program stored in the memory, to cause the communication apparatus to perform the method according to any one of claims 1 to 11, or cause the communication apparatus to perform the method according to any one of claims 12 to 19, or cause the communication apparatus to perform the method according to any one of claims 20 to 27.

30. A computer-readable storage medium, comprising a computer program, wherein when the computer program is run on a computer, the computer is caused to perform the method according to any one of claims 1 to 27.
